# DEMANDE DE BREVET EUROPEEN

(11) **EP 3 991 883 A1**
(43) Date de publication de la demande: **04.05.2022**
(21) Numéro de dépôt: 20306289.8
(22) Date de dépôt: 27.10.2020
(51) Int. Cl.: B22F 5/04, B22F 7/08, B23P 15/04, F04D 29/02, F04D 29/32, F04D 29/54, B22D 19/00, B22D 19/04, B33Y 80/00, B33Y 10/00, B22F 10/00

(54) **PROCÉDÉ DE FABRICATION D'UNE AUBE POUR TURBOMACHINE**

(71) Demandeur: SAFRAN, 75015 Paris (FR); Safran Aero Boosters, 4041 Herstal (BE)
(72) Inventeur: LEFAUX, Yann Jean-Pierre, 40401 HERSTAL (BE); SALLOT, Pierre, Jean, 77550 MOISSY-CRAMAYEL (FR)
(74) Mandataire: Ernest Gutmann - Yves Plasseraud S.A.S.

(57) **Abrégé**

Le présent document concerne un procédé de fabrication d'une aube (2) pour turbomachine comportant un pied (6) relié à une pale (4) s'étendant selon une direction longitudinale, le procédé comprenant les étapes:
- fournir un ensemble (10) comprenant :
o un première partie (12) destinée à former un pied (6) de l'aube (2) ;
o une deuxième partie (14) s'étendant en saillie selon la direction longitudinale depuis la première partie (12) ;

- fournir un moule comprenant une première empreinte (50) et une seconde empreinte (52) délimitant ensemble une cavité (58), ladite cavité (58) comprenant un premier espace (64) et un second espace (66);
- agencer la première partie (12) dans le premier espace (64) de la cavité (58) et la deuxième partie (14) dans le second espace (66) de la cavité (58) ;
- injecter un alliage à base d'aluminium, cet alliage formant une troisième partie (16).

## Description

### Domaine technique de l'invention

Le présent document concerne un procédé de fabrication d'une aube pour turbomachine comportant un pied en alliage à base de titane relié à une pale à base d'aluminium.

### Etat de la technique antérieure

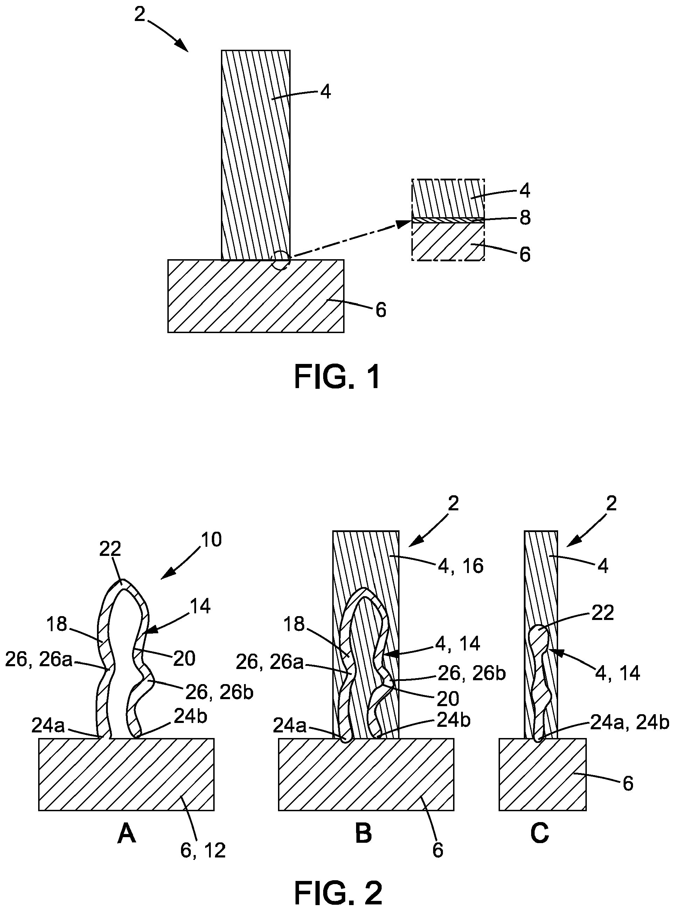

Une nouvelle architecture de turbomachine est recherchée afin de satisfaire les besoins de l'aviation. Cette nouvelle architecture nécessite une mise en œuvre de compresseurs capables de supporter de fortes vitesses de rotation. Ce changement d'architecture induit des contraintes supplémentaires ou nouvelles, qu'il est nécessaire de considérer dans la fabrication des aubes 2 rotoriques et statoriques de compresseurs.
Parmi celles-ci, la masse des aubages en rotation est notamment un défi. Classiquement, il est connu de fabriquer des aubes comprenant un pied et une pale, les aubes étant réalisées en titane afin d'assurer une certaine résistance mécanique à l'ensemble. Cependant, les aubages en alliage de titane imposent des efforts centrifuges importants, notamment sur le disque portant lesdites aubes, rendant la recherche de solutions matériaux à faible densité nécessaire.
Employer des alliages tels que de l'aluminium afin de réduire la densité de la pale n'est pas sans conséquence. Comme illustré en figure 1, les procédés actuels de soudure d'une pale 4 en alliage à base d'aluminium à un pied 6 en un alliage à base de titane conduisent à charger exclusivement une zone de liaison 8 entre ledit pied 6 et la pale 4. Cette soudure est très difficile voire impossible à réaliser avec des procédés de soudure conventionnels compte tenu de la nature des deux matériaux à mettre en contact. En effet, les températures de fusion du titane et de l'aluminium sont trop différentes et cette soudure génère alors la formation de phases intermétalliques fragiles dans la zone de liaison 8. Même si la soudure reste possible, la zone de liaison 8 entre la pale 4 et le pied 6 formant une interface plan-plan, contenant des phases intermétalliques fragiles, risque de rompre car l'intégralité des efforts entre la pale 4 et le pied 6 se concentre sur la zone de liaison 8 fragile. Ce risque de rupture est d'autant plus important que les vitesses de rotation de la turbomachine sont grandes.
La problématique reste similaire si on utilise d'autres procédés d'assemblage comme le brasage ou le rivetage. En effet, dans de telles situations un perçage dans la zone de liaison 8 engendre une concentration des contraintes mécaniques dans cette zone de liaison 8 qui peuvent engendrer des fissurations.

### Présentation de l'invention

Le présent document concerne un procédé de fabrication d'une aube pour turbomachine comportant un pied relié à une pale s'étendant selon une direction longitudinale, le procédé comprenant les étapes:
- fournir un ensemble comprenant :
   ∘ un première partie destinée à former un pied de l'aube, cette première partie étant réalisée en un alliage à base de titane,
   ∘ une deuxième partie s'étendant en saillie selon la direction longitudinale depuis la première partie ;
- fournir un moule comprenant une première empreinte et une seconde empreinte délimitant ensemble une cavité dans laquelle l'aube est destinée à être formée, ladite cavité comprenant un premier espace destiné à former la pale et un second espace destiné à former le pied ;
- agencer la première partie dans le premier espace de la cavité et la deuxième partie dans le second espace de la cavité ;
- injecter un alliage à base d'aluminium, cet alliage formant une troisième partie dans laquelle est noyée la deuxième partie.
De cette manière, la troisième partie de l'aube en un alliage à base d'aluminium injecté dans le moule va noyer la seconde partie, laquelle assure ainsi une retenue radiale optimale de la troisième partie sur le pied de l'aube. La liaison entre l'aube et le pied n'est donc plus problématique : la deuxième partie permet d'assurer un assemblage mécanique, un moyen d'accroche entre le pied et la pale. On comprend que la deuxième partie et la troisième partie forment ensemble la pale.
La première partie est en un alliage à base de titane ayant une température de fusion comprise entre 1600 et 1700°C et la deuxième est en un alliage à base d'aluminium ayant une température de fusion comprise entre 500 et 600 °C. Cette différence entre les températures de fusion de l'aluminium et du titane permet de limiter les interactions entre la troisième partie d'une part, et la première partie et deuxième partie d'autre part et de limiter ainsi la formation de phases fragiles.
L'ensemble peut être réalisé en fabrication additive.
La deuxième partie peut comprendre une forme générale en U comportant une première branche et une seconde branche reliées par une partie de sommet.
De par sa forme, la deuxième partie permet de raidir la pale lorsque la pale n'est pas suffisamment raide. Cette deuxième partie comprend donc de par sa forme un moyen d'ajustement de la raideur de la pale.
La première branche et/ou la seconde branche peuvent comprendre des excroissances.

Les excroissances permettent de générer une surface spécifique importante assurant un ancrage efficace de la première partie avec la troisième partie.
Les excroissances peuvent comporter des excroissances s'étendant transversalement vers l'intérieur de la forme générale en U et/ou des excroissances s'étendant transversalement vers l'extérieur de la forme générale en U.
Ladite deuxième partie peut comporter au moins un circuit interne de circulation d'air apte à recevoir de l'air chaud venant de l'extérieur de l'aube.
Le circuit interne de circulation d'air de la deuxième partie permet ainsi de réchauffer la pale et ainsi éviter l'accrétion de glace.
Le circuit interne de circulation d'air peut comprendre des sorties d'air débouchant sur une surface extérieure de la troisième partie.
Ce circuit interne de circulation d'air permet également de modifier l'aérodynamisme de la pale et de prélever une couche limite circulante au voisinage de la première partie ainsi qu'au voisinage de la surface extérieure de la troisième partie formant un bord de fuite.

### Brève description des figures

[Fig. 1] représente une représentation schématique d'une aube de turbomachine ;
[Fig. 2] représente :
   - en figure 2A une représentation schématique d'un premier mode de réalisation d'un ensemble comprenant une première partie et une deuxième partie selon l'invention ;
   - en figure 2B une représentation schématique du premier mode de réalisation de l'aube de turbomachine vue de face selon l'invention ;
   - en figure 2C une représentation schématique du premier mode de réalisation de l'aube de turbomachine vue de côté selon l'invention ;

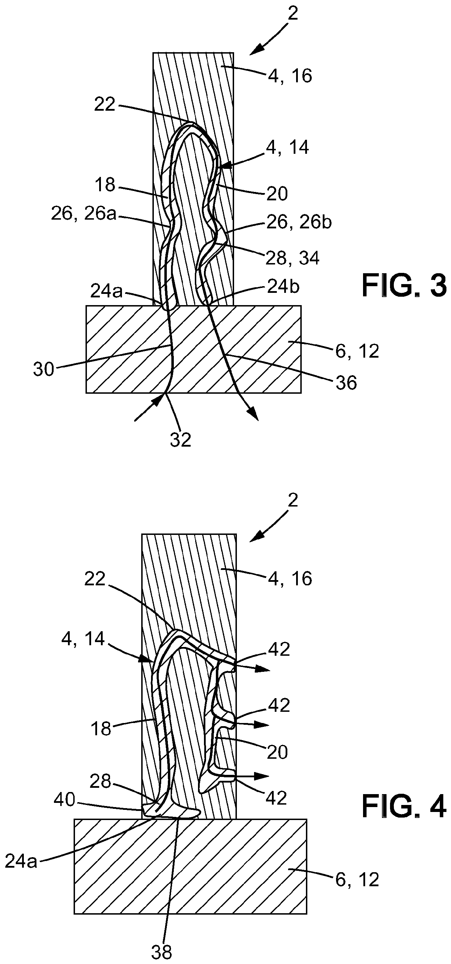

[Fig. 3] représente une représentation schématique d'un deuxième mode de réalisation d'une aube de turbomachine comportant un circuit de circulation d'air selon l'invention ;
[Fig. 4] représente une représentation schématique d'un troisième mode de réalisation d'une aube de turbomachine comportant un circuit de circulation d'air selon l'invention ;

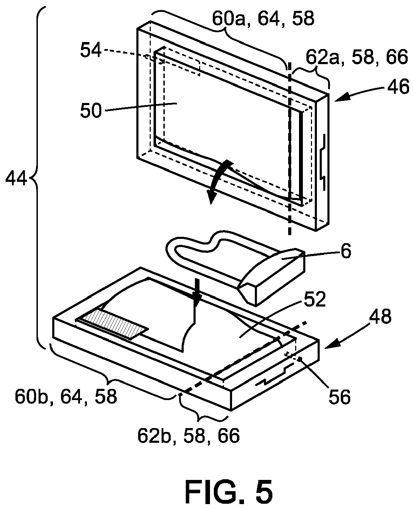

[Fig. 5] représente une représentation schématique d'un moule selon l'invention ;

### Description détaillée de l'invention

Le présent document concerne une aube 2 comprenant un pied 6 en un alliage à base de titane compatible avec les matériaux employés pour un disque (ou virole) portant lesdits pieds 6 d'aube 2. Cette compatibilité permet d'envisager un assemblage direct entre l'aube 2 s'étendant longitudinalement et le disque (ou la virole) par soudage par friction par exemple. Ladite aube 2 comporte, en outre, une pale 4 comprenant un alliage d'aluminium.

La figure 2 illustre une représentation schématique d'un premier mode de réalisation d'une aube 2 de turbomachine selon le présent document. Plus précisément, la figure 2A illustre une représentation schématique d'un ensemble 10 comprenant une première partie 12 et une deuxième partie 14. La figure 2B est une représentation schématique d'une aube 2 de turbomachine vue de face et la figure 2C est une représentation schématique d'une aube 2 de turbomachine vue de côté.
Comme illustré en figure 2, la deuxième partie 14 comprend une forme générale en U adaptée pour s'étendre en saillie depuis la première partie 12 selon la direction longitudinale sur une dimension longitudinale comprise entre 20 et 90% de la dimension longitudinale de l'aube. Cette deuxième partie 14 est destinée à former avec une troisième partie 16 la pale de l'aube. Cette deuxième partie 14 comporte une première branche 18 et une seconde branche 20 qui sont reliées l'une à l'autre par une partie de sommet 22. La première branche 18 et la seconde branche 20 comprennent chacune une extrémité 24a, 24b d'un côté opposé à la partie de sommet 22. Ces extrémités 24a, 24b de la première 18 branche et de la seconde 20 branche sont chacune reliées à la première partie 12. L'une et/ou l'autre de la première branche 18 et de la seconde 20 branche comprennent des excroissances 26. Ces excroissances 26 comprennent des excroissances s'étendant transversalement à l'intérieur 26a de la forme générale en U et/ou des excroissances s'étendant transversalement vers l'extérieur 26b de la forme générale en U. Ces excroissances 26 forment des zones d'accroche comprenant un état de surface tel que l'accroche à la troisième partie 16 est optimisée.
La première partie 12 est destinée à former le pied 6 de l'aube 2. La première partie 12 peut présenter une forme initialement distincte de la forme finale du pied 6 d'aube 2. Cette première partie 12, pouvant former une préforme du pied, peut ainsi être usinée afin d'épouser la forme finale du pied 6 d'aube 2 souhaitée.

Selon un deuxième mode de réalisation illustré en figure 3, l'aube 2 comporte une première partie 12, une deuxième partie 14 et une troisième partie 16 de façon similaire au premier mode de réalisation. Dans cette réalisation, la deuxième partie 14 comporte un circuit interne de circulation d'air 28. Ce circuit interne de circulation d'air 28 comporte une première section 30 ayant une extrémité 32 débouchant à l'extérieur de la première partie 12, du côté opposé à la pale 4. Ce circuit de circulation d'interne 28 comprend, en outre, une deuxième section 34 passant à l'intérieur de la deuxième partie 14 ayant une forme générale en U et une troisième section 36 reliée de façon continue à la deuxième section 34 et débouchant à l'extérieur de la première partie du côté opposé à la pale.

Selon un troisième mode de réalisation particulier illustré en figure 4, l'aube 2 comporte une première partie 12, une deuxième partie 14 et une troisième partie 16 de façon similaire au premier mode de réalisation. Dans ce troisième mode de réalisation, un circuit interne de circulation d'air 28 débute dans la première branche 18 à l'extrémité opposée à la partie de sommet. Cette extrémité opposée à la partie de sommet 22 comporte une première zone 38 adjacente à la première partie 12 et une seconde zone 40 débouchant à l'extérieur de l'aube 2. Cette seconde zone 40 peut comprendre une seule zone débouchant à l'extérieur de l'aube ou une pluralité de de zones débouchant à l'extérieur de l'aube sur une dimension comprise entre 0 et 80% d'une dimension longitudinale de la troisième partie. La seconde branche 20 de la deuxième partie 14 est libre, c'est-à-dire non reliée à la première partie 12, et comprend des sorties d'air 42 débouchant sur une surface extérieure de la troisième partie 16. Ces sorties d'air 42 peuvent, par exemple, être au nombre de trois mais ce nombre de sorties d'air n'est pas limitatif et il peut y avoir une seule sortie d'air ou une pluralité.

Comme illustré en figure 5, un moule 44 est utilisé afin de fabriquer une telle aube 2. Ladite aube 2 à fabriquer épouse in fine la géométrie du moule 44. Le moule 44 comprend au moins une première coque 46 et une seconde coque 48 qui agencées l'une contre l'autre forment ledit moule 44. La première coque 46 comporte une première face interne formant une première empreinte 50. La seconde coque 48 comporte une seconde face interne formant une seconde empreinte 52. Lorsque la première coque 46 et la seconde coque 48 sont assemblées l'une contre l'autre, la première empreinte 50 et la seconde empreinte 52 forment ensemble une cavité 58 dans laquelle l'aube est destinée à être formée.
La première empreinte 50 et la seconde empreinte 52 comprennent chacune une première zone 60a, 60b et une seconde zone 62a, 62b. La première zone 60a de la première empreinte 50 délimite avec une première zone 60b de la seconde empreinte 52 un premier espace 64 de la cavité 58, laquelle est destinée à former la pale. La seconde zone 62a de la première empreinte 50 délimite avec la seconde zone 62b de la seconde empreinte 52 un second espace 66 de cavité 58 lequel est destiné à recevoir la première partie 12 de l'aube 2. Le premier espace 64 de la cavité 58 et le second espace 66 de la cavité 58 forment ensemble la cavité interne 58 du moule 44 destinée à recevoir la deuxième partie 14 de l'aube 2.
La première coque 46 comporte un premier canal interne 54 dont une première extrémité débouche au niveau de la première partie 64 de la cavité 58 et une seconde extrémité débouche à l'extérieur dudit moule 44. La seconde coque 48 comporte un second canal interne 56 dont une première extrémité débouche au niveau de la seconde partie 66 de la cavité 58 et une seconde extrémité débouche à l'extérieur dudit moule 44.
Le premier espace 64 de la cavité 58 délimite une zone dans laquelle est injecté un métal liquide destiné à former la troisième partie de l'aube. Le second espace 66 de la cavité 58 est, en outre, apte à recevoir notamment le pied de l'aube fabriqué de préférence par fabrication additive.

Selon le présent document, la première partie 12 est agencée dans le second espace 66 de la cavité 58 et la deuxième partie 14 est agencée dans le premier espace 64 de la cavité 58. Un alliage à base d'aluminium est injecté de façon à former la troisième partie 16 et à noyer la deuxième partie 14, la deuxième partie étant alors entourée par la troisième partie. La deuxième 14 et la troisième partie 16 forment ainsi la pale 4 de l'aube 2.
On comprend que la deuxième partie 14 permet d'assurer un accrochage de la troisième partie 16 sur la deuxième partie 14, cette dernière formant donc un moyen d'accroche entre le pied et la troisième partie 16 destinée à former la partie de la pale 2 en alliage d'aluminium. En effet, la forme de la deuxième partie 14 et notamment les excroissances permettent de réaliser une surface spécifique importante assurant un ancrage efficace de la deuxième partie 14 avec la troisième partie 16. La forme de la deuxième partie permet un maintien mécanique radial et l'état de surface permet d'optimiser l'accroche dans un sens transverse en augmentant la surface spécifique. Cet état de surface permet, en outre, de compenser des retraits liés à une solidification de la troisième partie autour du U.
De par sa forme, la deuxième partie 14 peut, en outre, permettre de rigidifier la pale lorsque la pale n'est pas suffisamment rigide. Cette deuxième partie 14 forme donc, de par son agencement et sa constitution, un moyen d'ajustement de la raideur de la pale.
Le circuit interne de circulation d'air 28 de la deuxième partie peut permettre de réchauffer la pale et ainsi éviter l'accrétion de glace par circulation d'air dans la structure interne de la pale. Ce circuit interne de circulation d'air 28 peut également permettre de modifier l'aérodynamisme de la pale 4 et de prélever une couche limite circulante au voisinage de la surface extérieure de la troisième partie formant un bord de fuite.
La première partie 12 est avantageusement en un alliage à base de titane ayant une température de fusion comprise entre 1600 et 1700°C et la seconde est en un alliage à base d'aluminium ayant une température de fusion comprise entre 500 et 600 °C. Cette différence entre les températures de fusion de l'aluminium et du titane permet de limiter les interactions entre la troisième partie 16 d'une part, et la première partie 12 et deuxième partie 14 d'autre part et de limiter ainsi la formation de phases fragiles.
La première partie 12 et la deuxième partie peuvent être obtenues au moyen d'un procédé de fabrication additive. De cette manière, la deuxième partie 14 peut présenter toute forme adaptée à l'accrochage de la troisième partie 16 sur la deuxième partie 14.

## Revendications

1. Procédé de fabrication d'une aube (2) pour turbomachine comportant un pied (6) relié à une pale (4) s'étendant selon une direction longitudinale, le procédé comprenant les étapes:
- fournir un ensemble (10) comprenant :
∘ un première partie (12) destinée à former un pied (6) de l'aube (2), cette première partie (12) étant réalisée en un alliage à base de titane,
∘ une deuxième partie (14) s'étendant en saillie selon la direction longitudinale depuis la première partie (12) ;
- fournir un moule comprenant une première empreinte (50) et une seconde empreinte (52) délimitant ensemble une cavité (58) dans laquelle l'aube est destinée à être formée, ladite cavité (58) comprenant un premier espace (64) destiné à former la pale et un second espace (66) destiné à former le pied (6) ;
- agencer la première partie (12) dans le premier espace (64) de la cavité (58) et la deuxième partie (14) dans le second espace (66) de la cavité (58) ;
- injecter un alliage à base d'aluminium, cet alliage formant une troisième partie (16) dans laquelle est noyée la deuxième partie (14).

2. Procédé de fabrication d'une aube selon la revendication 1, dans lequel l'ensemble (10) est réalisé en fabrication additive.

3. Procédé de fabrication d'une aube selon l'une des revendications précédentes, dans lequel la deuxième partie comprend une forme générale en U comportant une première branche (18) et une seconde branche (20) reliées par une partie de sommet (22).

4. Procédé de fabrication d'une aube selon la revendication 3, dans lequel la première branche (18) et/ou la seconde branche (20) comprennent des excroissances (26).

5. Procédé de fabrication d'une aube selon la revendication 4, dans lequel les excroissances (26) comporte des excroissances s'étendant transversalement vers l'intérieur (26a) de la forme générale en U et/ou des excroissances s'étendant transversalement vers l'extérieur (26b) de la forme générale en U.

6. Procédé de fabrication d'une aube selon l'une des revendications précédentes, dans lequel ladite deuxième partie (14) comporte au moins un circuit interne de circulation d'air (28) apte à recevoir de l'air chaud venant de l'extérieur de l'aube (2).

7. Procédé de fabrication d'une aube selon la revendication 6, dans lequel le circuit interne de circulation d'air (28) comprend des sorties d'air (42) débouchant sur une surface extérieure de la troisième partie (16).
